# EUROPÄISCHE PATENTSCHRIFT

(11) **EP 3 455 601 B1**
(45) Veröffentlichungstag und Bekanntmachung des Hinweises auf die Patenterteilung: **29.04.2020**
(21) Anmeldenummer: 18716225.0
(22) Anmeldetag: 05.04.2018
(51) Int. Cl.: G01M 3/04

(54) **WIEDERVERWENDBARER MUFFEN-LECKSENSOR**
REUSABLE SLEEVE LEAK DETECTOR
DÉTECTEUR DE FUITE À MANCHON RÉUTILISABLE

(30) Priorität: 06.04.2017 EP 17165305
(43) Veröffentlichungstag der Anmeldung: 20.03.2019
(73) Patentinhaber: Wolf, Roland, 70437 Stuttgart (DE)
(72) Erfinder: Wolf, Roland, 70437 Stuttgart (DE)
(74) Vertreter: Jeck, Anton
(86) Internationale Anmeldenummer: PCT/EP2018/058672
(87) Internationale Veröffentlichungsnummer: WO 2018/185198

(56) Entgegenhaltungen:
- EP-A1- 2 352 005
- EP-A2- 0 212 877
- DE-A1- 19 839 426
- US-A- 5 757 988

## Beschreibung

Die Erfindung betrifft eine Weiterentwicklung der Messvorrichtung EP 1 110 070 B1, nämlich einen wiederverwendbaren Muffen-Lecksensor zur Erkennung von Wassereintritt in Verbindungsmuffen von Lichtwellenleitern, wobei dieser Sensor mit einem wasserquellenden Körper auf einem Schieber angeordnet ist. Bei Wasseraufnahme schiebt der Quellkörper den Schieber mit dem Abschnitt des Lichtwellenleiters (LWL) so weit in das Gehäuse, dass der LWL bei einer Biegung von max. 20 mm an dem angeschlossenen optischen Messgerät in einer Entfernung von bis über 70 km den Wassereintritt ortsgenau in der Verbindungsmuffe erkannt werden kann. Nach Wassereintrittsortung kann noch nach über 30 Tagen der Fehler ab der Verbindungsmuffen beseitigt, die Muffe und das Gehäuse getrocknet und ohne Unterbrechung der LWL der wasserquellende Schieber ausgetauscht werden.

Bekannt ist ein Wassersensor aus der Beschreibung EP 1 110 070 B1 mit dem Titel "Lichtwellenleiter-Wassersensor". Die mit weit über 100.000 Stück in der Praxis bewährte Vorrichtung arbeitet mit einer Viskoseschwammplatte und einem PE-Spannband, das eine optisch zulässige Eigenschaftsänderung abstützt. Der Wassersensor ist nur als Einweg-Sensor herstellbar.

Nachteil der bekannten Messvorrichtung besteht darin, dass sie nicht wieder verwendbar ist und dass der Wassereintritt mit mindestens vier Sensor-Typenreihen trotz der Sicherung durch diese vielen Sensoren nur ein Teil der neuen LWL-Generation E DIN EN 60793-2-50 erkannt wird.

Ein weiterer Nachteil ist, dass LWL-Kabelhersteller/-lieferanten keine einheitliche Fasertypen-/ Makrobiegeverlust-Zuordnung angeben und dass durch das LWL-Einfärbeverfahren oder der Farbauftrag keine zuverlässige Erkennung in einem tolerierten Minimal- bzw. Maximaldämpfungsbereich des Wassereintritts gewährleistet werden kann.

Bekannt ist ein weiterer Feuchtesensor für LWL-Systeme zur Erkennung von relativer Luftfeuchte in Muffen, so dass schon geringe Undichtigkeiten erkannt werden können, bevor sich die Muffe mit Wasser füllt und selbst bei Benetzung mit Wasser nach Austrocknung wieder betriebsbereit ist.

Nachteilig bei diesem Feuchtesensor ist, dass es bei dem LWL bei einer max. Durchbiegung mit einem Durchmesser von 5 mm bei den nach E-DN EN 60793-2-50 Abs. 5.5 geforderten Prüfungen und Umweltanforderungen höchstwahrscheinlich zu einem Faserbruch kommen würde.

Die DE 198 89 428 offenbart einen Wassersensor mit Gehäuse und Lichtwellenleiter, in dem ein elastisches Gummiband vorgesehen ist, welches über 2 Spannelemente an dem Quellkörper anliegt und dem Lichtwellenleiter zustellbar ist.

Die US 5 757 988 A betrifft einen Wassersensor mit Lichtwellenleiter, wobei ein Schwellkörper im Inneren eines Gehäuses vorgesehen ist, in welches durch die Öffnungen Fluide zu dem Schwellkörper vordringen können. Im Inneren des Gehäuses ist ein Schiebeelement 16 angeordnet, welches über einen gebogenen Draht mit einem Lichtwellenleiter 30 interagiert.

Ein weiterer Nachteil ist, dass unter Betriebsbedingung DIN EN 50411-2-3, Tabelle 7 (bei verschlammtem Wasser) eine Wiederverwendbarkeit bis zur Leckstellenbeseitigung nicht mehr gewährleistet ist.

Ein wesentlicher weiterer Nachteil ist, dass der Feuchtesensor nicht auf eine einfache Weise werk- oder bauseitig durch Justierung das sog. Hygrobändchen auf die neuen Fasergenerationen E-DIN EN 60793-2-50 angepasst werden kann.

Aufgabe der vorliegenden Erfindung ist, einen für verschiedene LWL universell einsetzbaren, wiederverwendbaren Muffen-Lecksensor bereit zu stellen, welcher auch bei Verschmutzung zuverlässig eine Leckage im Bereich des LWL anzeigt.

Diese **Aufgabe** wird durch einen Muffen-Lecksensor gemäß Anspruch 1 gelöst. Bei einem Muffen-Lecksensor ist der Quellkörper auf einem auswechselbaren Schieber angeordnet.

Ein erfindungsgemäßer Muffen-Lecksensor ist mit einem wasserempfindlichen Quellkörper versehen, welcher ausgebildet ist, bei Aufnahme von Flüssigkeit oder Suspension zu expandieren und einen Lichtwellenleiter umzubiegen, wobei eine Leckstelle, welche das Wasser oder die Suspension abgibt, ortsgenau durch einen Makrokrümmungsverlust des Lichtwellenleiters messbar ist.

Die vorliegende Erfindung ist dadurch gekennzeichnet, dass der Muffen-Lecksensor ein mindestens zweigeteiltes flüssigkeit- oder suspension-aufnehmendes, luftdurchlässiges Gehäuse mit einem Gehäuseunterteil und einem Gehäuseoberteilaufweist, in welchem der Lichtwellenleiter zumindest teilweise vorgesehen ist, dass in dem Gehäuse ein austauschbarer Quellkörper-Schieber eingelegt ist, welcher mindestens eine Auflage für den Quellkörper aufweist, wobei der Quellkörper-Schieber bei einer Expansion des Quellkörpers aus einer ersten Position in mindestens eine zweite Position translatorisch verschiebbar ist, in welcher der Quellkörper-Schieber dem Lichtwellenleiter lichtwellenleiter-umbiegend zugestellt ist, dass die mindestens eine Auflage für den Quellkörper in Verschiebungsrichtung des Quellkörper-Schiebers seitlich an dem Quellkörper-Schieber vorgesehen ist, und dass der Quellkörper-Schieber eine lichtwellenleiter-zugewandte Oberfläche aufweist, welche, vorzugsweise nach der Aufnahme von Flüssigkeit oder Suspension durch den Quellkörper, den Lichtwellenleiter unmittelbar kontaktiert, wobei der Lichtwellenleiter in Abhängigkeit von der Expansion des Quellkörpers umbiegbar ist, wodurch ein Makrokrümmungsverlust, insbesondere bei 1625 nm > 0,2 dB erzeugbar ist, welcher mit einem RFTS-System ortsgenau lokalisierbar ist.

Nach einem Grundgedanken der vorliegenden Erfindung ist ein Schieber in einem Gehäuse vorgesehen, welcher durch Expansion eines Quellkörpers in dem Gehäuse verschiebbar ist. Durch Aufnahme von Flüssigkeit oder Suspension kann der Quellkörper in seiner Größe/Volumen zunehmen und Druck auf den Schieber ausüben, wodurch dieser den Schieber in dem Gehäuse verschieben kann. An dem Schieber kann zumindest eine Auflage für den Quellkörper vorgesehen sein, auf welcher der Quellkörper seitlich zur Bewegungs- beziehungsweise Verschiebungsrichtung des Schiebers aufgelegt ist. Der Quellkörper kann in dem Gehäuse austauschbar vorgesehen sein.

Durch die mindestens eine seitliche Auflage an dem Schieber für den Quellkörper kann eine Reibung oder ein Anhaften/Verkleben von Quellkörper an dem Gehäuse oder anderen Einrichtungen in dem Gehäuse vorgebeugt werden. Die Auflage bewegt sich mit dem Schieber bei einer Verschiebung des Schiebers mit und ist als Teil des Schiebers ausgebildet.

Nach einer Weiterbildung der Erfindung ist es vorgesehen, dass die Auflage für den Quellkörper eine Flächen-Normale aufweist, welche in etwa orthogonal zur Verschiebungsrichtung des Quellkörperschiebers ausgerichtet ist und/oder dass sich die Auflage für den Quellkörper in Verschiebungsrichtung des Quellkörper-Schiebers erstreckt. Die Auflage kann insbesondere so angeordnet sein, dass der Quellkörper mit einer Seite orthogonal zu einer Verschiebungsrichtung des Schiebers auf einer Oberfläche der Auflage angeordnet ist. Mit einer zweiten Seiten kann der Quellkörper an einem Bereich aufliegen, an welcher die lichtwellenleiter-zugewandte Oberfläche vorgesehen ist, wobei die zweite Auflagefläche der lichtwellenleiter-zugewandte Oberfläche gegenüberliegt, also auf einer lichtwellenleiter-abgewandten Seite/Oberfläche vorgesehen ist. Die lichtwellenleiter-abgewandten Seite/Oberfläche weist eine normale auf, welche in etwa parallel zur Verschiebungsrichtung des Schiebers angeordnet ist. Vorzugsweise sind die seitliche Auflage und die zweite Auflagefläche in etwa orthogonal zu einander.

Nach einer bevorzugten Weiterbildung der Erfindung ist es vorgesehen, dass an dem Quellkörper-Schieber mindestens zwei Auflagen für den Quellkörper vorgesehen sind, welche in Bewegungsrichtung des Quellkörper-Schiebers seitlich an dem Quellkörper-Schieber vorgesehen sind, sich in Verschiebungsrichtung des Quellkörper-Schiebers erstrecken und jeweils für den Quellkörper eine in Verschiebungsrichtung seitliche Auflage bilden. Die mindesten zwei Auflagen können jeweils eine normale aufweisen, welche orthogonal zu der Verschiebungsrichtung des Schiebers ausgerichtet ist. Vorzugsweise sind die mindestens zwei Auflagen zusätzlich zu der Auflage auf der lichtwellenleiter-abgewandten Seite/Oberfläche des Schiebers vorgesehen.

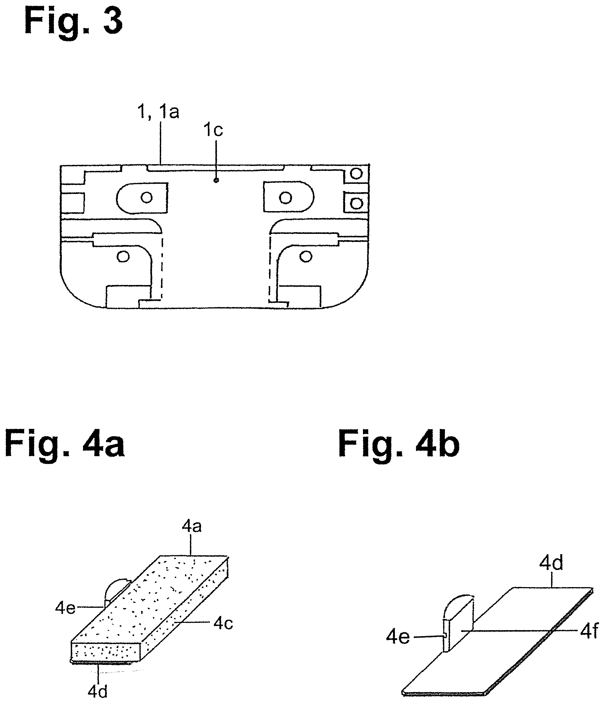

Nach einer besonders bevorzugten Weiterbildung der Erfindung ist es vorgesehen, dass der Quellkörper-Schieber mindestens zweiteilig gebildet ist, wobei ein erster Teil die seitlichen Quellkörper-Auflage-n bildet, die in Fig. 4b beispielhaft mit dem Bezugszeichen 4d bezeichnet sind, und ein zweiter Teil die Kontaktfläche mit dem Lichtwellenleiter in Form der lichtwellenleiter-zugewandte Oberfläche bildet. Der zweite Teil kann insbesondere auch die Auflagefläche aufweisen, welche eine Normale parallel zur Verschiebungsrichtung hat. Diese Auflagefläche ist in Fig. 4b mit dem Bezugszeichen 4f versehen.

Eine zweckmäßige Weiterbildung der Erfindung besteh darin, dass in dem zweiten Teil des Quellkörper-Schiebers auf der lichtwellenleiter-zugewandte Oberfläche ein Lichtwellenleiter-Führungskanal, vorzugsweise als Längskerbe, bereitgestellt ist, welcher parallel zu einer Ausbreitungsrichtung des Lichtwellenleiters in dem Gehäuse vorgesehen ist und ausgebildet ist, den Lichtwellenleiter (6) aufzunehmen und/oder auszurichten. Der Lichtwellenleiter kann mit einer Vorspannung in dem Gehäuse vorgesehen sein, wobei er in dem Führungskanal angeordnet ist. Alternativ hierzu kann der Lichtwellenleiter erst bei einer Verschiebung des Schiebers in den Führungskanal eingreifen, wobei in beiden Fällen einem Abrutschen oder Abrollen des Lichtwellenleiters von dem Schieber vorgebeugt sein kann.

Besonders zweckmäßig ist es nach einer Weiterbildung der Erfindung, dass die seitlichen Auflage-n für den Quellkörper jeweils mindestens eine Auflagefläche aufweist/aufweisen, die in etwa der Größe des Quellkörpers entspricht, und auf welcher der Quellkörper vorgesehen ist. Grundsätzlich kann die Auflage eine beliebige Größe aufweisen, welche auch größer oder kleiner als der vorgesehene Quellkörper sein kann. Besonders bevorzugt ist es jedoch, dass der Quellkörper vollständig seitlich auf der jeweiligen Auflage aufliegt. Hierdurch werden die Vorteile, des Grundgedankens der Erfindung besonders vorteilhaft erreicht.

Eine weitere Weiterbildung der Erfindung besteht darin, dass der Quellkörper, aus einem mindestens zweilagigen Viskose-pressschwamm oder aus mindestens zwei Lagen Quellvliesband gebildet ist.

Besonders zweckmäßig ist es nach einer Weiterbildung der Erfindung, dass im Gehäuseunterteil durchgängige Öffnungen für die Flüssigkeit oder die Suspension, ein Quellkörper-Schieber-Haltestift zum arretieren des Quellkörper-Schiebers in einer Position, eine Quellkörper-Schieber-Führung, entlang welcher der Quellkörper-Schieber führbar verschiebbar ist, ein Lichtwellenleiter-Führungskanal mit Lichtwellenleiter-Umlenk-bögen (entlang welcher der Lichtwellenleiter definiert ausgerichtet und umbiegbar ist und/oder Deckelöffnungen für Aufclipsdorne angeordnet sind.

Nach einer Weiterbildung der Erfindung ist es zweckmäßig, dass das Gehäuseoberteil mit abgerundeten Aufclipsdornen mit Lichtwellenleiter-Führungsschienen, Zwangsentlüftungslöchern und/oder Deckelgriffen ausgebildet ist.

Anders als beim Stand der Technik detektiert der wiederverwendbare Muffen-Lecksensor die Anforderungen nach DIN EN 50411-2-3 (LWL-Spleißkassetten und -muffen für die Anwendung in LWL-Kommunikationssystemen: Tabelle 7: Anforderungen an das umweltbezogene Dichtungsverhalten im Temperaturbereich von -30° C bis +60° C (EN 61300-2-22)) und Eintauchen in Wasser- und Schlammgemische HCl bei pH 2, NaOH bei pH 12 (EN 61300-2-34).

Von besonderem Vorteil ist auch, dass mit, vorzugsweise zwei, bauseitig austauschbaren Quellkörper-Schiebern bei der neuen Fasergeneration ITU-T
G.652.A/B, G.652.C/D
G.657.A1, G.657.A2 und G.657.B2
eine Muffen-Leckstelle zuverlässig und ortsgenau detektiert werden kann.

Ein Aspekt der Erfindung besteht darin, in einer Weiterentwicklung des LWL-Wassersensors der EP 1 110 070 B1 einen Muffen-Lecksensor mit, vorzugsweise maximal zwei, austauschbaren Quellkörper-Schiebern zur Detektierung von Muffen-Leckstellen zu schaffen, der gemäß dem Oberbegriff des Anspruchs 1 auch für LWL der neuen Generationen der E-DIN EN 60793-2-50 einsetzbar ist.

Die Erfindung wird nun anhand von Ausführungsbeispielen näher erläutert. Es zeigen:
- Fig. 1: eine schematische Darstellung eines mit austauschbarem Quellkörper-Schieber ausgestatteten, geöffneten Muffen-Lecksensors;
- Fig. 2: eine schematische Darstellung eines aktivierten Quellkörper-Schiebers der Fig. 1;
- Fig. 3: eine schematische Darstellung eines Deckels des Muffen-Lecksensors
- Fig. 4a: einen auswechselbaren Quellkörper-Schieber gemäß Fig. 1 und Fig. 2;
- Fig. 4b: einen Quellkörper-Schieber;
- Fig. 5: eine schematische Darstellung eines Quellkörper-Schiebers ohne Quellkörper.

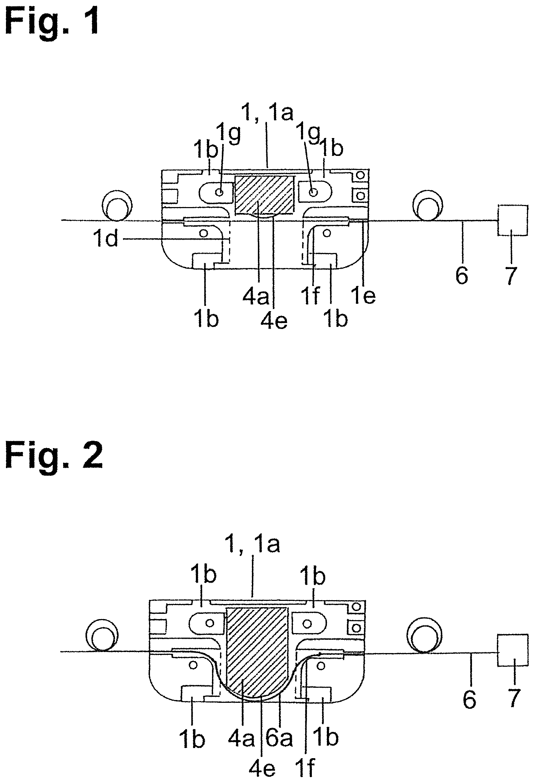

Die Fig. 1 zeigt das Prinzip des Muffen-Lecksensors 1, bestehend aus einem wasserdurchlässigen Gehäuseunterteil 1a, 1b zum Ankleben in einer LWL-Spleißkassette oder am Boden einer Muffe und einem wasserquellenden Quellkörper auf einem Quellkörper-Schieber 4a, also einem Schieber, mit einer Schieberführung 1d, also einer seitlichen Auflagefläche im Gehäuseunterteil 1a. In einem LWL-Führungskanal 1e, vorzugsweise mit ausgebildeten LWL-Umlenkbögen 1f, ist ein LWL 6, insbesondere gemäß der neuen Generation E-DIN EN 60793-2-50, eingelegt, der am Ende mit einem Remote Fiber Test System (RFTS) OTDR 7 verbunden werden kann. Bei geöffnetem Gehäuse ist der LWL in den Führungskanal 1e unmittelbar einlegbar.

Die Fig. 2 zeigt einen Muffen-Lecksensor der Fig. 1 mit einem durch Wasser-Schlammgemisch-Aufnahme, insbesondere von pH 2 bis pH 12, bis zum Gehäuseende 1a aktivierten Quellkörper-Schieber 4a mit einem LWL 6, der über LWL-Umlenkbögen 1f, 4e mit einem kleinsten Biegedurchmesser von 20 mm geschoben sein kann.

Die Fig. 3 zeigt einen Muffen-Lecksensor der Fig. 1 und Fig. 2 mit einem Quellkörper-Haltestift 1c zum Halten des Quellkörper-Schiebers der Figur 4a während und nach der Montage des Muffen-Lecksensors 1 und des LWL 6. Der Haltestift 1c garantiert, dass durch den Quellkörper-Schieber der Fig. 4a ohne Wasser-Schlammgemische der LWL 6 nicht gebogen wird und das (RFTS-) OTDR-System 7 keine Fehlalarmmeldungen signalisieren kann.

Die Fig. 4a zeigt einen in der Fig. 1 und Fig. 2 auswechselbaren Quellkörper-Schieber 4a. Dieser weist eine Quellkörper-Auflage 4d und eine, im Betriebszustand, dem lichtwellenleiter-zugewandte Oberfläche mit einem LWL-Führungskanal 4e auf. Eine dem lichtwellenleiter-abgewandte Oberfläche 1f, kann als Auflage oder Klebestelle für den Quellkörper 4c dienen. Im eingebauten Zustand bewegt sich die Quellkörper-Auflage 4d in etwa orthogonal zur Oberfläche 4f, wobei der Quellkörper 4c auf der mindestens einen, seitlich vorgesehenen Quellkörper-Auflage 4d aufliegt. Hierdurch kann in besonders bevorzugter Weise bei einer Ausdehnung des Quellkörpers und damit verbundener relativ Bewegung zwischen Gehäuse und Quellkörper-Schieber 4a, die Reibung zwischen den sich bewegenden Teilen, insbesondere dem Quellkörper und dem Gehäuse, vermindert werden und einem Verkleben des Quellkörpers mit dem Gehäuse vorgebeugt werden.

Die Fig. 4b zeigt einen Quellkörper-Schieber der Fig. 4a ohne Quellkörper 4c mit einem zum LWL 6 angeordneten Führungskanal 4e mit einer Quellkörper-Anklebefläche als lichtwellenleiter-abgewandte Oberfläche 4f.

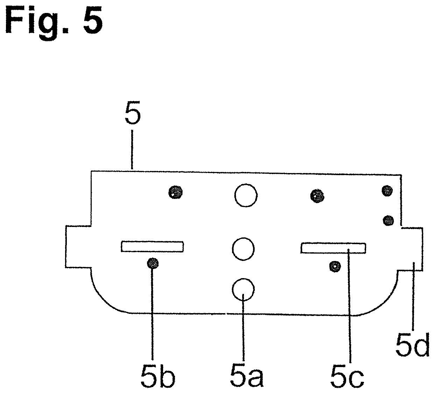

Die Fig. 5 zeigt eine schematische Darstellung eines Deckels 5 des Muffen-Lecksensors mit kreisrunden Zwangsentlüftungen 5a, abgerundeten Aufclipsdornen 5b und LWL-Führungsschienen 5c, der mit Deckelgriffen 5d ausgerüstet sein kann.

**Bezugszeichenliste**

| | Nr. | Nummernliste |
|---|---|---|
| Fig. 1 | 1 | Muffen-Lecksensor |
| | 1a | Gehäuseunterteil zum Ankleben |
| | 1b | durchgängige Öffnungen für Wasser-Schlamm-Gemische |
| | 1d | Quellkörper-Schieberführung |
| | 1e | Lichtwellenleiter-Führungskanal |
| | 1f | Lichtwellenleiter-Umlenkbogen |
| | 1g | Deckelöffnungen für Aufclipsdorne |
| | 4a | Quellkörper-Schieber |
| | 4e | Lichtwellenleiter-Führungskanal |
| | 6 | Lichtwellenleiter Typ OS1 oder OS2 |
| | 7 | RFTS-/OTDR-Messsystem |
| | | |
| Fig. 2 | 1 | Muffen-Lecksensor |
| | 1a | Gehäuseunterteil zum Ankleben |
| | 1b | durchgängige Öffnungen für Wasser-Schlamm-Gemische |
| | 1f | Lichtwellenleiter-Umlenkbogen |
| | 4a | Quellkörper-Schieber durch Wasseraufnahme aktiviert |
| | 4e | Lichtwellenleiter-Führungskanal |
| | 6 | Lichtwellenleiter Typ OS1 oder OS2 |
| | 6a | Lichtwellenleiter ≥ Ø 20 mm, umgebogen |
| | 7 | RFTS-/OTDR-Messsystem |
| | | |
| Fig. 3 | 1 | Muffen-Lecksensor |
| | 1a | Gehäuseunterteil zum Ankleben |
| | 1c | Quellkörper-Schieber-Haltestift |
| Fig. 4a | 4a | Quellkörper-Schieber auswechselbar |
| | 4c | Quellkörper |
| | 4d | Quellkörper-Auflage |
| | 4e | Lichtwellenleiter-Führungskanal |
| | | |
| Fig. 4b | 4d | Quellkörper-Auflage |
| | 4e | Lichtwellenleiter-Führungskanal |
| | 4f | zum Ankleben des Quellkörpers |
| | | |
| Fig. 5 | 5 | Gehäuseoberteil (= Deckel) des Muffen-Lecksensors |
| | 5a | kreisrunde Zwangsentlüftung |
| | 5b | abgerundeter Aufclipsdorn |
| | 5c | Lichtwellenleiter-Führungsschiene |
| | 5d | Deckelgriff |

| DIN EN | IEC | ITU-T |
|---|---|---|
| 60793-2-50 | 86A/1343 / CD:2010 | |
| (Nov. 2010) | B1.1 | G.652.A/B |
| 60793-2-50 | B1.3 | G.652.C/D |
| (Nov. 2010) | B-6a1 | G.657.A1 |
| | B6-a2 | G.657.A2 |
| | B6-b2 | B2 |
| 50411-2-2 | ICS 33.180.20 | |
| (Nov. 2012) | | |
| 50411-2-3 | ICS 33.180.20 | |
| (Sep. 2012) | | |
| 61300-2-22 | 61300-2-22 | |
| (Jahr 2007) | | |
| 61300-2-34 | 61300-2-34 | |
| (Dez. 2009) | | |

## Patentansprüche

1. Muffen-Lecksensor (1) mit einem wasserempfindlichen Quellkörper (4c), welcher ausgebildet ist, bei Aufnahme von Flüssigkeit oder Suspension zu expandieren, wodurch ein Lichtwellenleiter (6) umbiegbar ist, wobei eine Leckstelle ortsgenau durch einen Makrokrümmungsverlust des Lichtwellenleiters (6) messbar ist, wobei
- der Muffen-Lecksensor ein mindestens zweigeteiltes flüssigkeit- oder suspension-aufnehmendes, luftdurchlässiges Gehäuse mit einem Gehäuseunterteil (1a) und einem Gehäuseoberteil (5) aufweist, in welchem der Lichtwellenleiter zumindest teilweise vorgesehen ist, **dadurch gekennzeichnet,**
- **dass** in dem Gehäuse ein austauschbarer Quellkörper-Schieber (4a) eingelegt ist, welcher mindestens eine Auflage (4d) für den Quellkörper (4c) aufweist, wobei der Quellkörper-Schieber (4a) bei einer Expansion des Quellkörpers (4c) aus einer ersten Position in mindestens eine zweite Position translatorisch verschiebbar ist, in welcher der Quellkörper-Schieber (4a) dem Lichtwellenleiter zugestellt ist und diesen dabei umbiegt,
- **dass** die mindestens eine Auflage (4d) für den Quellkörper (4c) in Verschiebungsrichtung des Quellkörper-Schiebers (4a) seitlich an dem Quellkörper-Schieber (4a) vorgesehen ist, und
- **dass** der Quellkörper-Schieber (4a) eine lichtwellenleiter-zugewandte Oberfläche aufweist, welche, vorzugsweise nach der Aufnahme von Flüssigkeit oder Suspension durch den Quellkörper (4c), den Lichtwellenleiter (6) unmittelbar kontaktiert, wobei der Lichtwellenleiter (6) in Abhängigkeit von der Expansion des Quellkörpers (4c) umbiegbar ist, wodurch ein Makrokrümmungsverlust, insbesondere bei 1625 nm > 0,2 dB erzeugbar ist, welcher mit einem Remote Fiber Test System-System (7) ortsgenau lokalisierbar ist.

2. Muffenlecksensor nach Anspruch 1,
**dadurch gekennzeichnet,**
**dass** die seitlichen Auflage (4d) für den Quellkörper (4c) eine Flächen-Normale aufweist, welche in etwa orthogonal zur Verschiebungsrichtung des Quellkörperschiebers ausgerichtet ist und/oder dass sich die Auflage (4d) für den Quellkörper (4c) in Verschiebungsrichtung des Quellkörper-Schiebers (4a) erstreckt.

3. Muffen-Lecksensor nach Anspruch 1 oder 2,
**dadurch gekennzeichnet,**
**dass** an dem Quellkörper-Schieber (4a) mindestens zwei Auflagen (4d) für den Quellkörper (4c) vorgesehen sind, welche in Bewegungsrichtung des Quellkörper-Schiebers (4a) seitlich an dem Quellkörper-Schieber (4a) vorgesehen sind, sich in Verschiebungsrichtung des Quellkörper-Schiebers (4a) erstrecken und jeweils für den Quellkörper (4c) eine in Verschiebungsrichtung seitliche Auflage bilden.

4. Muffen-Lecksensor nach einem der Ansprüche 1 bis 3,
**dadurch gekennzeichnet,**
**dass** der Quellkörper-Schieber (4a) mindestens zweiteilig gebildet ist, wobei ein erster Teil die seitlichen Quellkörper-Auflage-n (4d) bildet und ein zweiter Teil die Kontaktfläche mit dem Lichtwellenleiter (6) in Form der lichtwellenleiter-zugewandte Oberfläche bildet.

5. Muffen-Lecksensor nach Anspruch 4,
**dadurch gekennzeichnet,**
**dass** in dem zweiten Teil des Quellkörper-Schiebers (4a) auf der lichtwellenleiter-zugewandte Oberfläche ein Lichtwellenleiter-Führungskanal (4e), vorzugsweise als Längskerbe, bereitgestellt ist, welcher parallel zu einer Ausbreitungsrichtung des Lichtwellenleiters (6) in dem Gehäuse vorgesehen ist und ausgebildet ist, den Lichtwellenleiter (6) aufzunehmen und/oder auszurichten.

6. Muffen-Lecksensor nach einem der Ansprüchen 1 bis 5,
**dadurch gekennzeichnet,**
**dass** die seitichen Auflage-n (4d) für den Quellkörper (4c) mindestens eine Auflagefläche aufweist, die in etwa der Größe des Quellkörpers (4c) entspricht, und auf welcher der Quellkörper (4c) vorgesehen ist.

7. Muffen-Lecksensor nach den Ansprüchen 1 bis 6
**dadurch gekennzeichnet,**
**dass** der Quellkörper (4c), aus einem mindestens zweilagigen Viskose-pressschwamm oder aus mindestens zwei Lagen Quellvliesband gebildet ist.

8. Muffen-Lecksensor nach Anspruch 1,
**dadurch gekennzeichnet,**
**dass** im Gehäuseunterteil (1a) durchgängige Öffnungen (1b) für die Flüssigkeit oder die Suspension, ein Quellkörper-Schieber-Haltestift (1c) zum arretieren des Quellkörper-Schiebers (4a) in einer Position, eine Quellkörper-Schieber-Führung (1d), entlang welcher der Quellkörper-Schieber (4a) führbar verschiebbar ist, ein Lichtwellenleiter-Führungskanal (1e) mit Lichtwellenleiter-Umlenkbögen (1f) entlang welcher der Lichtwellenleiter definiert ausgerichtet und umbiegbar ist und/oder Deckelöffnungen (1g) für Aufclipsdorne angeordnet sind.

9. Muffen-Lecksensor nach Anspruch 1,
**dadurch gekennzeichnet,**
**dass** das Gehäuseoberteil (5) mit abgerundeten Aufclipsdornen (5b) mit Lichtwellenleiter-Führungsschienen (5c), Zwangsentlüftungslöchern (5a) und/oder Deckelgriffen (5d) ausgebildet ist.

## Claims

1. A sleeve leak detector (1) having a water-sensitive swell body (4c), which is embodied so as to expand upon absorbing a liquid or a suspension, a fiber optical waveguide (6) can be bent as a result of this expansion, and a leak can be measured, in terms of where it is located, from a macroscopic loss of curvature of the fiber optical waveguide (6),
wherein the sleeve leak detector has a liquid- or suspension-absorbent, air-permeable housing divided into at least two parts, having with a housing lower part (1a) and a housing upper part (5), in which housing the fiber optical waveguide is at least partially provided, **characterized in that**
- a replaceable swell body slide (4a) is placed in the housing and has at least one overlay (4d) for the swell body (4c), and upon an expansion of the swell body (4c), the swell body slide (4a) is translationally displaceable from a first position into at least one second position, in which second position the swell body slide (4a) is oriented toward the fiber optical waveguide and in the process turns the fiber optical waveguide around;
- that in the direction of displacement of the swell body slide (4a), the at least one overlay (4d) for the swell body (4c) is provided laterally on the swell body slide (4a); and
- that the swell body slide (4a) has a surface that is oriented toward the fiber optical waveguide, which surface, preferably after the absorption of liquid or suspension by the swell body (4c), contacts the fiber optical waveguide (6) directly, and the fiber optical waveguide (6) can be bent as a function of the expansion of the swell body (4c), and as a result of this bending, a macrocurvature loss can be generated, in particular at 1625 nm > 0.2 dB, which loss can be localized locally precisely by a remote fiber test system (7).

2. The sleeve leak detector of claim 1,
**characterized in that**
the lateral overlay (4d) for the swell body (4c) has a surface normal which is oriented approximately orthogonally to the direction of displacement of the swell body slide and/or that the overlay (4d) for the swell body (4c) extends in the direction of displacement of the swell body slide (4a).

3. The sleeve leak detector of claim 1 or 2,
**characterized in that**
on the swell body slide (4a), at least two overlays (4d) for the swell body (4c) are provided, which in terms of the direction of motion of the swell body slide (4a) are provided laterally on the swell body slide (4a) and extend in the direction of displacement of the swell body slide (4a), and each of them forms a lateral overlay, in the direction of displacement, for the swell body (4c).

4. The sleeve leak detector of one of claims 1 through 3,
**characterized in that**
the swell body slide (4a) is embodied in at least two parts, wherein a first part forms the lateral swell body overlays (4d), and a second part forms the contact face with the fiber optical waveguide (6) in the form of the surface oriented toward the fiber optical waveguide.

5. The sleeve leak detector of claim 4,
**characterized in that**
in the second part of the swell body slide (4a), on the surface oriented toward the fiber optical waveguide, a fiber optical waveguide guide conduit (4e), preferably in the form of a longitudinal notch, is furnished, which is provided parallel to a propagation direction of the fiber optical waveguide (6) in the housing and is embodied for receiving and/or aligning the fiber optical waveguide (6

6. The sleeve leak detector of one of claims 1 through 5,
**characterized in that**
the lateral overlays (4d) for the swell body (4c) have at least one overlay surface which is approximately equivalent to the size of the swell body (4c) and on which the swell body (4c) is provided.

7. The sleeve leak detector of claims 1 through 6,
**characterized in that**
the swell body (4c) is formed of an at least two-layer viscose compressed sponge, or of at least two overlays of swelling tape.

8. The sleeve leak detector of claim 1,
**characterized in that**
through openings (1b) for the liquid or suspension, a swell body slide retainer pin (1c) for locking the swell body slide (4a) in a position, a swell body slide guide (1d) along which the swell body slide (4a) can be guidably displaced, a guide channel (1e) for the fiber optical waveguide, which channel has fiber optical waveguide deflection curves (1f) along which curves the fiber optical waveguide is oriented and is bendable, and/or top openings (1g) for clip-on mandrels are all located in the lower housing part (1a).

9. The sleeve leak detector of claim 1,
**characterized in that**
the upper housing part (5) is embodied with rounded clip-on mandrels (5b) having guide rails (5c) for the fiber optical waveguide, with compulsory ventilation holes (5a) and/or with lid handles (5d).

## Revendications

1. capteur de fuite de manchons (1) avec un corps de source sensible à l'eau (4c) formé de manière à s'étendre en réception du liquide ou en suspension dont une fibre optique (6) est repliable où un emplacement de fuite est mesurable à titre précis par la perte des microcourbures de la fibre optique (6)
Est caractérisé de sorte que
Le capteur de fuite de manchons (1) présente au minimum un boîtier en deux parties absorbant le liquide ou la suspension perméable à l'air avec une partie inférieure (1a) et une partie supérieure (5) où la fibre optique est prévue au minimum à titre partielle
Est caractérisé de sorte qu'
Un coulisseau du corps de source est introduit à titre interchangeable au niveau du boîtier présentant au minimum un support (4d) pour le corps de source (4c) où le coulisseau du corps de source (4a) est déplaçable en expansion du corps de source (4c) de la première position en au minimum deuxième position par translation où le coulisseau du corps de source (4a) remplit la fibre optique et courbe ce dernier.
Qu'au minimum le support (4d) est prévu pour le corps de source (4c) en direction de déplacement du coulisseau du corps de source (4a) à titre latéral du coulisseau du corps de source (4a) et
Que le coulisseau du corps de source (4a) présente une surface tournée vers la fibre optique contactant à titre préférentiel après absorption du liquide ou après la suspension via le corps de source (4c) la fibre optique (6) à titre directe où la fibre optique (6) est repliable en fonction de l'expansion du corps de source (4c) où une perte de microcourbure, particulièrement au niveau 1625 nm>0,2 dB, se produit localisée grâce à un système Remote Fiber Test (7).

2. capteur de fuite de manchons selon la revendication 1
Est caractérisé de sorte que
Les supports latéraux (4d) présentent pour le corps de source (4c) une surface normale orientée presque à titre orthogonale en direction de déplacement du coulisseau du corps de source et/ou que le support (4d) s'étend pour le corps de source (4c) en direction de déplacement du coulisseau du corps de source.

3. capteur de fuite de manchons selon la revendication 1 ou 2
Est caractérisé de sorte qu'
Au minimum deux supports (4d) sont prévus au coulisseau du corps de source (4a) pour le corps de source (4c) prévus en direction de déplacement du coulisseau du corps de source (4a) latéralement au coulisseau du corps de source (4a) d'étendant en direction de déplacement du coulisseau du corps de source (4a) et forment respectivement un support latérale pour le corps de source (4c) en direction de déplacement.

4. capteur de fuite de manchons selon la revendication 1 jusqu'à 3
Est caractérisé de sorte que
Le coulisseau du corps de source (4a) est formé au minimum en deux parties où une première partie forme latéralement le support pour le corps de source (4d) et une deuxième partie forme la surface de contact avec la fibre optique (6) sous forme d'une surface orientée vers la fibre optique.

5. capteur de fuite de manchons selon la revendication 1 jusqu'à 4
Est caractérisé de sorte qu'
Un conduit de guidage de la fibre optique (4e) est introduit dans la deuxième partie du coulisseau du corps de source (4a) au niveau de la surface orientée vers la fibre optique à titre préférentiel en qualité d'encoche longitudinale qui est prévue parallèlement à une direction de propagation de la fibre optique (6) dans le boîtier et qui est formée de manière à intégrer la fibre optique (6) et/ou à l'orienter.

6. capteur de fuite de manchons selon la revendication 1 jusqu'à 5
Est caractérisé de sorte que
Les supports latéraux (4d) présentent pour le corps de source (4c) au minimum une surface de support qui correspond presque à la taille du corps de source (4c) et au niveau de laquelle le corps de source (4c) est prévu.

7. capteur de fuite de manchons selon la revendication 1 jusqu'à 6
Est caractérisé de sorte que
Le corps de source (4c) se compose au minimum d'une presse sulfitée en deux couches en viscose ou au minimum de deux couches de bande non tissée de source.

8. capteur de fuite de manchons selon la revendication 1
Est caractérisé de sorte que
Des ouvertures perméables (1b) sont placées dans la partie inférieure du boîtier (1a) pour le liquide ou la suspension, une goupille de retenue du coulisseau du corps de source (1c) pour l'arrêt du coulisseau du corps de source (4a) en une position, un guidage du coulisseau du corps de source (1d) au long duquel le coulisseau du corps de source (4a) est déplaçable de manière guidable, un canal de guidage de la fibre optique (1e) avec des arcs de déviation (1f) au long desquels la fibre optique est orientée à titre défini et est repliable et/ou les ouvertures du couvercle sont disposées sur les broches de clipsage.

9. capteur de fuite de manchons selon la revendication 1
Est caractérisé de sorte que
La partie supérieure du boîtier (5) est formée de broches de clipsage arrondies avec des rails de guidage de la fibre optique (5c), avec des trous de filtration de pression (5a) et/ou des poignées de couvercle (5d).
